# EUROPEAN PATENT SPECIFICATION

(11) **EP 3 234 007 B1**
(45) Date of publication and mention of the grant of the patent: **26.05.2021**
(21) Application number: 15813388.4
(22) Date of filing: 17.12.2015
(51) Int. Cl.: C08L 23/12, C08L 23/16, C08K 5/00, C08K 5/14

(54) **PROCESS FOR THE PREPARATION OF A HETEROPHASIC PROPYLENE COPOLYMER**
VERFAHREN ZUR HERSTELLUNG EINES HETEROPHASIGEN PROPYLENCOPOLYMERS
PROCÉDÉ DE PRÉPARATION D'UN COPOLYMÈRE DE PROPYLÈNE HÉTÉROPHASIQUE

(30) Priority: 19.12.2014 EP 14199422
(43) Date of publication of application: 25.10.2017
(60) Divisional application: 21168883.3
(73) Proprietor: SABIC Global Technologies B.V., 4612 PX Bergen op Zoom (NL)
(72) Inventor: REMERIE, Klaas, 6160 GA Geleen (NL); STEENBAKKERS-MENTING, Henrica, Norberta, Alberta, Maria, 6160 GA Geleen (NL); VAN DER VEN, Maud, 6160 GA Geleen (NL)
(74) Representative: Ishiguro, Masaoki
(86) International application number: PCT/EP2015/080164
(87) International publication number: WO 2016/097107

(56) References cited:
- EP-A1- 1 354 901
- EP-A1- 2 072 546
- EP-A1- 2 072 546
- EP-A1- 2 083 046
- EP-A1- 2 824 142
- EP-A1- 2 824 142
- WO-A1-2014/044680
- WO-A2-2010/034684
- WO-A2-2010/034684
- US-A1- 2006 155 069
- US-A1- 2014 088 255

## Description

The invention is directed to a process for the preparation of a heterophasic propylene copolymer and the use of the heterophasic propylene copolymer.

Polypropylene is formed by polymerizing propylene with suitable catalysts. Polypropylene properties vary according to molecular weight, method of production, and the copolymers involved. A heterophasic propylene copolymer has at least a two-phase structure, consisting of a propylene-based semi-crystalline matrix and a dispersed elastomer phase, typically an ethylene-propylene rubber (EPR). These polypropylenes are generally prepared in one or more reactors, by polymerization of propylene in the presence of a catalyst system, and subsequent polymerization of a propylene-ethylene mixture; but can also be made by blending different (co)polymers. The advantage of heterophasic propylene copolymers is improved impact resistance, especially at lower temperatures.

Heterophasic propylene copolymers are also known as impact polypropylene.

WO 2014/044680 comprises a process for the preparation of a composition comprising heterophasic propylene copolymer and talc.

US 2014/0088255 discloses a propylene resin material capable of affording molded article superior in impact properties, tensile properties and appearance.

EP 2 083 046 relates to polymer compositions with improved scratch resistance and no or low gloss.

US 2006/0155069 discloses a process for making a thermoplastic polyolefin ekastomer.

EP1354901 describes heterophasic propylene polymer compositions comprising 70-95 wt% of a matrix phase comprising a propylene homopolymer and/or a propylene copolymer and 5-30 wt% of a disperse phase comprising an ethylene rubber copolymer, the ethylene rubber copolymer being distributed within the polymer composition in the form of particles. It is described that this heterophasic propylene polymer is characterized by an improved processability as well as an improved balance of mechanical parameters.

There is however a demand to further improve the mechanical properties of the heterophasic propylene copolymers, in particular the balance between the melt flow, the toughness and the stiffness of the heterophasic propylene copolymer.

It is an object of the invention to provide a process for the preparation of a heterophasic propylene copolymer having improved mechanical properties.

The object is achieved according to the invention by a process for the preparation of a heterophasic propylene copolymer comprising mixing a polymer composition comprising 55-95 wt% of a propylene polymer and 5-45 wt% of an ethylene-propylene rubber with 0.01-1 wt% of an organic peroxide with a decomposition half-life time of 6 minutes at a temperature between 80 and 109 °C and 0.001- 1.5 wt% of a co-agent, wherein all weight percentages are based on the total weight of the polymer composition, wherein the mixing is performed at a temperature which is below the temperature where the organic peroxide has a decomposition half-life time of 6 minutes to obtain a mixed polymer composition, and subsequently melt-mixing the mixed polymer composition.

It was surprisingly found that during melt-mixing of the polymer composition with the organic peroxide and the co-agent the melt flow index (MFI) value of the polymer composition remained at an about equal level while the Izod impact raised to a higher value compared with the Izod impact of the polymer composition before melt-mixing. Moreover the amount of crosslinking of the heterophasic propylene copolymer remains very low, giving a low gel content, excellent appearance and absence of surface defects.

An additional advantage of the process of the present invention is, that stable MFI values can be obtained, which do not depend on slight variations of the process. Moreover the heterophasic propylene copolymer obtained in the process of the invention shows an improved brittle to tough transition temperature relative to the (reference) polymer composition that is introduced in the process of the invention.

The invention is directed to a process for the preparation of a heterophasic propylene copolymer comprising mixing a polymer composition comprising a propylene polymer and an ethylene-propylene rubber with a peroxide and a co-agent and subsequently melt-mixing the mixed polymer composition.

The polymer composition comprises a propylene polymer. The propylene polymer can be chosen from a propylene homopolymer and/or a propylene copolymer comprising at least 90 wt% of propylene and up to 10 wt% ethylene and/or at least one C₄ to C₁₀ alpha-olefin. In a preferred embodiment, the propylene polymer is a propylene homopolymer.

The amount of propylene polymer in the polymer composition is 55-95 wt% based on the total weight of the polymer composition, preferably the amount of propylene polymer is 65-95 wt%, more preferably 70-90 wt%.

The polymer composition also comprises an ethylene-propylene rubber. The ethylene-propylene rubber preferably comprises from 15 to 70 wt% of ethylene and from 30 to 85 wt% of propylene. The ethylene-propylene rubber can also comprise an amount of up to 10 wt% of a C₄ to C₁₀ alpha-olefin.

The amount of ethylene-propylene rubber in the polymer composition is 5-45 wt% based on the total weight of the polymer composition, preferably the amount of ethylene-propylene rubber is 5-35 wt%, more preferably 10-30 wt%.

The propylene polymer and ethylene-propylene copolymer can be mixed before the process according to the invention, for example during a polymerization process or blending process of the two components.

The polymer composition can have a MFI index (Melt Flow Index) between 1 and 50, preferably between 2 and 35, most preferably between 5 and 20. The MFI value is determined according to ISO 1133-1:2011.

In the process for the preparation of a heterophasic propylene copolymer an organic peroxide is present. The organic peroxide used in the process according to the invention has a low decomposition half-life temperature. The organic peroxide that is used in the process according to the invention has a decomposition half-life time of 6 minutes at a temperature between 80 and 109 °C. Preferably, the organic peroxide has a decomposition half-life time of 6 minutes at a temperature between 82 and 105 °C, more preferably between 85 and 100 °C.

Suitable organic peroxides can, for example, be chosen from the group consisting of tert-amyl peroxyneodecanoate, tert-butyl peroxyneodecanoate, 1,1,3,3-tetramethylbutyl peroxypivalate, tert-butyl peroxyneoheptanoate, tert-amyl peroxypivalate, tert-butyl peroxypivalate, di(3,5,5-trimethylhexanoyl) peroxide, dilauroyl peroxide, didecanoyl peroxide, 2,5-dimethyl-2,5-di(2-ethylhexanoylperoxy)hexane, 1,1,3,3-tetramethylbutyl peroxy-2-ethylhexanoate and tert-amyl peroxy-2-ethylhexanoate. Preferably, the organic peroxide has a structure according to formula I

R1-(C=O)-O-O-(C=O)-R2 (I)

wherein R1 and R2 are the same or different and are chosen from alkyl, aryl or aralkyl groups, having between 2 and 30 carbon atoms.

The alkyl, aryl and aralkyl groups can be linear or branched groups.

Examples of R1 or R2 groups are pentyl, hexyl, octyl, phenyl, cyclohexyl, 2-methylhexyl, 2,2-methylhexyl, 8-ethyloctyl, 3,5,5 trimethylhexanoyl, lauroyl, decanoyl or dibenzoyl. Preferably, the R1 and R2 groups contain between 6 and 25, more preferably between 10 and 20 carbon atoms. More preferably, the organic peroxide is chosen from the group consisting of di(3,5,5-trimethylhexanoyl) peroxide, dilauroyl peroxide and didecanoyl peroxide. Most preferably, the organic peroxide is dilauroyl peroxide.

The amount of organic peroxide that is added to the process of the invention is 0.01-1 wt% based on the total weight of the polymer composition, preferably the amount of organic peroxide is 0.05-0.9 wt%, more preferably 0.1-0.8 wt%.

In the process for the preparation of the heterophasic propylene copolymer a coagent is present. A co-agent is herewith defined as a monomeric compound which can be polymerized with the aid of free radicals. Preferably, the co-agent is a bi-functionally or poly-functionally unsaturated compound. 'Bi-functionally unsaturated' as used above means the presence of two polymerizable double bonds in the compound. 'Poly-functionally unsaturated' as used above means the presence of three or more polymerizable double bonds in the compound.

Examples of co-agents are:
- divinyl compounds, such as divinylaniline, ortho-divinylbenzene, para-divinylbenzene, divinylpentane and divinylpropane;
- allyl compounds, such as allyl acrylate, allyl methacrylate, allyl methyl maleate and allyl vinyl ether;
- compounds with two (meth)acrylate groups; and
- dienes, such as 1,3-butadiene, chloroprene, cyclohexadiene, cyclopentadiene, 2,3-dimethylbutadiene, heptadiene, hexadiene, isoprene and 1,4-pentadiene;
- and mixtures of these unsaturated monomers.

Preferably, the co-agent is chosen from the group consisting of 1,3-butadiene, isoprene, 2,3-dimethylbutadiene and ortho- or para-divinylbenzene, more preferably the co-agent is ortho- or para-divinylbenzene.

The amount of co-agent that is added in the process of the invention is between 0.001-1.5 wt% based on the total weight of the polymer composition, preferably the amount of co-agent is 0.01-1.2 wt%, more preferably 0.1-1.0 wt%.

According to the invention the process for the preparation of a heterophasic propylene copolymer comprises mixing a polymer composition comprising the propylene polymer and the ethylene-propylene rubber with the organic peroxide and the co-agent to obtain a mixed polymer composition and subsequently melt-mixing the mixed polymer composition.

Mixing is performed by mixing the polymer composition comprising the propylene polymer, the ethylene-propylene rubber, with the organic peroxide and the co-agent at a temperature which is below the temperature where the organic peroxide has a decomposition half-life time of 6 minutes. Preferably, the temperature during mixing is at least 5 °C below the temperature where the organic peroxide has a decomposition half-life time of 6 minutes, more preferably at least 10 °C below the temperature where the organic peroxide has a decomposition half-life time of 6 minutes. The temperature in the mixing zone can, for example, be between 20 and 104 °C, more preferably between 25 and 99 °C, most preferably between 50 and 95 °C.

Mixing can be performed in any way known to the person skilled in the art. Commonly used mixing devices are a tumbler mixer, a high speed mixer, a jet mixer, a planetary mixer or a Banbury mixer; and blenders, for example V blender, ribbon blender or a cone blender. During mixing the polymer composition can be preheated. Mixing can also be performed in a part of an extruder. Examples of extruders are mono and twin screw extruders.

After mixing the mixed polymer composition is melt-mixed by heating the mixed polymer composition to a temperature above the melting temperature of the propylene polymer.

The melting temperature of the propylene polymer is determined by differential scanning calorimetry according to ISO 11357, wherein heating is performed at a heating rate of 10 °C/min and the melting temperature is taken from the second heating curve. Melt-mixing preferably is performed at a temperature above 160 °C, more preferably at a temperature above 180 °C, most preferably at a temperature above 200 °C. Melt-mixing preferably is performed at a temperature below 300 °C, more preferably at a temperature below 280 °C, most preferably at a temperature below 260 °C.

Preferably, the process is performed in an extruder comprising a mixing zone having a temperature below the temperature where the organic peroxide has a decomposition half-life time of 6 minutes for mixing the propylene polymer, the ethylene-propylene rubber, the organic peroxide and the co-agent, and a subsequent reaction zone having a temperature above the melting temperature of the propylene polymer for melt-mixing the mixed polymer composition.

The invention also relates to the use of dilauroyl peroxide with a co-agent from the group consisting of 1,3-butadiene, isoprene, 2,3-dimethylbutadiene and ortho - or para-divinylbenzene in treating a heterophasic propylene polymer composition comprising 70-95 wt% of a propylene polymer and 5-30 wt% of an ethylene-propylene rubber, by first mixing the components at a temperature below the temperature where the dilauroyl peroxide has a decomposition half-life time of 6 minutes to obtain a mixed polymer composition and subsequent melt mixing the mixed polymer composition.

The invention is further directed to the use of the heterophasic propylene copolymer in garden furniture, household items, battery casings, automobile parts, containers, toys, crates and boxes.

Although the invention has been described in detail for purposes of illustration, it is understood that such detail is solely for that purpose and variations can be made therein by those skilled in the art without departing from the spirit and scope of the invention as defined in the claims.
It is further noted that the invention relates to all possible combinations of features described herein, preferred in particular are those combinations of features that are present in the claims.
It is noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention will now be elucidated by way of the following examples without however being limited thereto.

### EXAMPLES

### Materials

The polymer compositions were all Sabic products: blends of homopolymer of propylene with an ethylene propylene copolymer 'rubber'.

More detailed information regarding the composition of the polymer compositions can be found in table 1.

**Table 1: Propylene copolymers powder mixtures**

| | | **P1** | **P2** | **P3** |
|---|---|---|---|---|
| **MFI** | [g/10min] | 1.9 | 5.3 | 14.4 |
| **CXS overall C2** | [wt%] | 18 | 12 | 12 |
| **content** | [wt %] | 14 | 9 | 9 |
| **BTT** | [°C] | -4 | 40 | 60 |

### Peroxides:

- Laurox® S, dilauroyl peroxide; decomposition half-life time = 6 min at a temperature of 99 °C (T(°C) for t ½ of 0.1 h).
- Trigonox® BPIC-C75, t-butylperoxy isopropyl carbonate; decomposition half-life time = 6 min at a temperature of 137 °C.
- Luperox® 802PP40, di(t-butylperoxyisopropyl)benzene; decomposition half-life time = 6 min at a temperature of 156 °C.
- Perkadox 14, Di(tert-butylperoxyisopropyl)benzene, T(°C) for t ½ of 0.1 h is 156 °C.
- Trigonox 25, tert butyl peroxy pivalate, T(°C) for t ½ of 0.1 h is 94 °C.

Co-agent: Divinylbenzene (DVB)
*Additives:* Calcium stearate; Irganox® B225

### Preparation of the samples

The samples for the experiments were prepared with a standard additive package of 0.1 wt.% calcium stearate and 0.2 wt.% Irganox B225. Various ratios peroxide/co-agent were added to each sample. The additives and heterophasic propylene copolymer powders were pre-mixed and the peroxides and the co-agents were dosed per batch, and homogenized by hand just before the extrusion on a ZSK 25 extruder. All experiments have been performed with the same screw, temperature settings (temperature in the mixing zone was 40 °C and temperature in the melt-mixing zone was 240 °C), a screw speed of 200 rpm and a throughput of 8 kg/hour. In table 2 all the samples which were produced are described.

### Test methods

The MFI value was determined according to ISO 1133-1:2011 at 230 °C and 2.16 kg.

The Izod impact was determined according to ISO 180/4A at 23 °C and 3.2 mm or to determine the brittle to tough transition temperature (BTT) at various higher temperatures. The Izod impact was determined parallel (II).

All compounds analyzed were separated in a CXS (< 25 °C) fraction, a CXUS (25 °C - 130 °C) fraction (respectively called the 25C and the 130C fraction), and a gel fraction (non-soluble in hot xylene). The difference between a recovery of 100 wt.% and the observed recovery was taken as an indicative number for gel content.

Table 2 also shows the test results for all samples.

**Table 2: Test Results**

| **Experiment** | **Powder** | **Peroxide** | | **DVB** | **MFI** | **Impact** |
|---|---|---|---|---|---|---|
| | | **Type** | **wt%** | **wt%** | **g/10 min** | **kJ/m²** |
| CE1 | P1 | - | | - | 1,9 | 77 |
| CE2 | P1 | Laurox S | 0.62 | - | 2,3 | 77 |
| E1 | P1 | Laurox S | 0.62 | 0.22 | 0,6 | 83 |
| E2 | P1 | Laurox S | 0.62 | 0.44 | 1 | 86 |
| CE3 | P1 | Trig.BPIC | 0.36 | - | 6,4 | 56 |
| CE4 | P1 | Trig.BPIC | 0.36 | 0.22 | 0,9 | 57 |
| CE5 | P1 | Trig.BPIC | 0.36 | 0.44 | 0,1 | 20 |
| CE6 | P1 | Luperox 802PP40 | 0.36 | - | 150 | 6 |
| CE7 | P1 | Luperox 802PP40 | 0.36 | 0.22 | 35 | 20 |
| CE8 | P1 | Luperox 802PP40 | 0.36 | 0.44 | 12 | 22 |
| CE11 | P2 | - | | - | 5,3 | 16 |
| CE12 | P2 | Laurox S | 0.62 | - | 6,8 | 13 |
| E11 | P2 | Laurox S | 0.62 | 0.22 | 4,6 | 19 |
| E12 | P2 | Laurox S | 0.62 | 0.44 | 4,8 | 36 |
| CE13 | P2 | Trig.BPIC | 0.36 | - | 31 | 10 |
| CE14 | P2 | Trig.BPIC | 0.36 | 0.22 | 4,8 | 17 |
| CE15 | P2 | Trig.BPIC | 0.36 | 0.44 | 1 | 22 |
| CE16 | P2 | Luperox 802PP40 | 0.36 | - | >150 | 2,4 |
| CE17 | P2 | Luperox 802PP40 | 0.36 | 0.22 | 89 | 10 |
| CE18 | P2 | Luperox 802PP40 | 0.36 | 0.44 | 24 | 11 |
| CE21 | P3 | - | | - | 14,4 | 8 |
| CE22 | P3 | Laurox S | 0.62 | - | 17 | 8 |
| E21 | P3 | Laurox S | 0.62 | 0.22 | 15 | 10 |
| E22 | P3 | Laurox S | 0.62 | 0.44 | 14 | 10 |
| CE23 | P3 | Trig.BPIC | 0.36 | - | 95 | 8 |
| CE24 | P3 | Trig.BPIC | 0.36 | 0.22 | 12 | 13 |
| CE25 | P3 | Trig.BPIC | 0.36 | 0.44 | 1,8 | 13 |
| CE26 | P3 | Luperox 802PP40 | 0.36 | - | >150 | 1,5 |
| CE27 | P3 | Luperox 802PP40 | 0.36 | 0.22 | >150 | 5,7 |

| | | | | | | |
|---|---|---|---|---|---|---|
| CE=comparative experiment E=example | | | | | | |

Table 2 shows the effect of Laurox S in examples E1, E2, E11, E12, E21 and E22, which are examples according to the present invention and the effect of 2 other peroxides in comparative experiments CE3-CE8, CE13-CE18 and CE23-CE27, which comparative experiments are not according to the present invention. Furthermore three different polypropylene (PP) resins were tested.

The first PP-resin (P1) had a high rubber content, and therefore showed already a high Izod impact value at 23 °C. The Izod impact value was 77 kJ/m2. Treatment with other peroxides (Trigonox and Luperox) resulted in either crosslinking (which gave a lower MFI value) or degradation of the polymer (which gave a higher MFI value). At the same time for all comparative samples, the Izod impact values were lower than 77 kJ/m2. When the peroxide and co-agent of the present invention were added, the MFI values could be kept fairly constant and the impact of the polymer increased after the process of the invention. Moreover, the effect of the presence of the co-agent was rather independent from the concentration of co-agent, making the process a stable process.

The other two PP resins(P2 and P3) had a composition which contained a lower amount of rubber and therefore the impact values of the virgin material were 16 and 8 respectively. The difference in impact resistance resulted from the difference in MFI of both starting polymer compositions; a Product with a lower MFI gives a higher impact value.

For comparative experiments CE13-CE15 the use of Trigonox resulted first in an increase of MFI (in the absence of co-agent), but later in a strong decrease of MFI due to crosslinking, accompanied with a decrease of the impact. Moreover, the behaviour of the peroxide reaction was strongly dependent on the exact conditions: with only peroxide, an increase of MFI was shown which was due to polymer degradation, while with co-agent the MFI decreased to 4.8 g/10min, and with more co-agent decreased to 1 g/10min which was due to crosslinking. This means that the process with Trigonox as peroxide was very unstable, and slight changes in the process resulted in different polymers.

Furthermore, even at a significant lower MFI (CE15) the impact resistance obtained by using Trigonox was inferior compared to the impact resistance obtained by using Laurox (E12).

The use of Luperox showed (CE16-18) degradation of the polymer (increase of MFI) and a strong deterioration of the Impact values.

Examples E11-E12 with Laurox S (according to the invention) in combination with the co-agent divinylbenzene show a stable MFI and an increase of the Izod impact. The MFI did not depend very much on the level of coagent used, which made the process very stable.

Similar unstable MFI results were obtained for polymer P3 in comparative experiments C23 to C25 and stable MFI's for example E21-E22

The brittle to tough transition temperatures (BTT) were determined for the polymers resulting from examples E11, E12, E21 and E22 with the combination of Laurox S and divinylbenzene as co-agent.

The values of the BTT in parallel direction were compared (see table 3).

**Table 3. Brittle to Tough transition Temperatures (BTT)**

| Experiment | Polymer composition | peroxide | T1/2 0.1h | DVB | MFI | BTT | CXS | Gel wt% |
|---|---|---|---|---|---|---|---|---|
| CE11 | P2 | N | | N | 5.3 | 40 | 12 | 0 |
| CE12 | P2 | Laurox S | 99 | N | 6.8 | 40 | 12 | 0 |
| E11 | P2 | Laurox S | 99 | Y | 4.6 | 30 | 12 | |
| E12 | P2 | Laurox S | 99 | Y | 4.8 | 20 | 11 | 2 |
| CE21 | P3 | N | | N | 14.4 | 60 | 12 | |
| CE22 | P3 | Laurox S | 99 | N | 17 | 60 | 12 | |
| E21 | P3 | Laurox S | 99 | Y | 15 | 38 | 12 | |
| E22 | P3 | Laurox S | 99 | Y | 14 | 38 | 11 | |
| CE31 | P2 | Perkadox 14 | 156 | N | | | 11 | 4 |
| CE32 | P2 | Perkadox 14 | 156 | Y | | | 2 | 9 |
| CE33 | P2 | Trigonox BPIC | 137 | N | | | 10 | 3 |
| CE34 | P2 | Trigonox BPIC | 137 | Y | | | 2 | 10 |
| E31 | P2 | Trigonox 25 | 94 | N | | | 13 | 0 |
| E32 | P2 | Trigonox 25 | 94 | Y | | | 8 | 3 |

Table 3 shows that the brittle to tough transitions of the polymer compositions prepared in the process according to the invention with Laurox S and divinylbenzene have been lowered, which is an improved result compared to the reference polymer compositions.

In case CE11 where no Laurox S and no DVB is used, the BTT is 40 °C. With the use of both Laurox S and DVB, the BTT drops to 30 °C (0.22 wt% DVB) and 20 °C with 0.44 wt% DVB, while the impact increases to 19 and 36 kJ/mm2 respectively.

The effect of BTT decrease is even stronger at higher MFI levels. In CE21 with or without peroxide, but absent any accelerator, the BTT is 60 °C. By using a small amount of DVB (0.22 and 0.44 wt%) the BTT drops to 38 °C.

The amount of gel produced during the process according to the invention in combination with an accelerator also clearly gives an increase of the amount of gel being formed. When a peroxide is used having a decomposition half life time of 6 minutes (0.1 h) at a temperature below 109 celc, low levels of gels are obtained, especially in case Laurox S is being used.

## Claims

1. Process for the preparation of a heterophasic propylene copolymer comprising mixing a polymer composition comprising 55-95 wt% of a propylene polymer and 5-45 wt% of an ethylene-propylene rubber with 0.01-1 wt% of an organic peroxide with a decomposition half-life time of 6 minutes at a temperature between 80 and 109 °C and 0.001-1.5 wt% of a co-agent, wherein all weight percentages are based on the total weight of the polymer composition, wherein the mixing is performed at a temperature which is below the temperature where the organic peroxide has a decomposition half-life time of 6 minutes to obtain a mixed polymer composition, and subsequently melt-mixing the mixed polymer composition to prepare the heterophasic propylene copolymer.

2. Process according to claim 1, wherein the organic peroxide has a decomposition half-life time of 6 minutes at a temperature between 82 and 105 °C, more preferably between 85 and 100 °C.

3. Process according to claim 1, wherein the organic peroxide is chosen from the group consisting of tert-amyl peroxyneodecanoate, tert-butyl peroxyneodecanoate,1,1,3,3-tetramethylbutyl peroxypivalate, tert-butyl peroxyneoheptanoate, tert-amyl peroxypivalate, tert-butyl peroxypivalate, di(3,5,5-trimethylhexanoyl) peroxide, dilauroyl peroxide, didecanoyl peroxide, 2,5-dimethyl-2,5-di(2-ethylhexanoylperoxy)hexane, 1,1,3,3-tetramethylbutyl peroxy-2-ethylhexanoate and tert-amyl peroxy-2-ethylhexanoate.

4. Process according to any one of claims 1-3, wherein the organic peroxide has a structure according to formula I
R1-(C=O)-O-O-(C=O)-R2 (I)
wherein R1 and R2 are the same or different and are chosen from alkyl, aryl or aralkyl groups, having between 2 and 30 carbon atoms, preferably between 6 and 25 carbon atoms, more preferably between 10 and 20 carbon atoms.

5. Process according to any one of claims 1-4, wherein the peroxide is chosen from the group consisting of di(3,5,5-trimethylhexanoyl) peroxide, dilauroyl peroxide and didecanoyl peroxide, preferably the peroxide is dilauroyl peroxide.

6. Process according to any one of claims 1-5, wherein the co-agent is chosen from the group consisting of divinyl compounds, allyl compounds, compounds with two (meth)acrylate groups, dienes and mixtures of these unsaturated monomers.

7. Process according to any one of claims 1-6, wherein the co-agent is ortho- or para-divinylbenzene.

8. Process according to anyone of claims 1-7, wherein the process is performed in an extruder comprising a mixing zone having a temperature below the temperature where the organic peroxide has a decomposition half-life time of 6 minutes for mixing the propylene polymer, the ethylene-propylene rubber, the organic peroxide and the coagent, and a subsequent reaction zone having a temperature above the melting temperature of the propylene polymer for melt-mixing the mixed polymer composition.

9. Process according to anyone of claims 1- 8, wherein the temperature in the mixing zone is between 20 and 104 °C.

10. Process according to anyone of claims 1-9, wherein the propylene polymer can be chosen from a propylene homopolymer and/or a propylene copolymer comprising at least 90 wt% of propylene and up to 10 wt% ethylene and/or at least one C₄ to C₁₀ alpha-olefin.

11. Process according to anyone of claims 1-10, wherein the propylene polymer is a propylene homopolymer.

12. Use of the heterophasic propylene copolymer according to any one of claims 1-11 in garden furniture, household items, battery casings, automobile parts, containers, toys, crates and boxes.

13. Use of dilauroyl peroxide with a coagent from the group consisting of 1,3-butadiene, isoprene, 2,3-dimethylbutadiene and ortho- or para-divinylbenzene in treating a heterophasic propylene polymer composition comprising 55-95 wt% of a propylene polymer and 5-45 wt% of an ethylene-propylene rubber, by first mixing the components at a temperature below the temperature where the dilauroyl peroxide has a decomposition half-life time of 6 minutes to obtain a mixed polymer composition and subsequent melt mixing the mixed polymer composition.

## Patentansprüche

1. Verfahren zur Herstellung eines heterophasigen Propylencopolymers, umfassend das Mischen einer Polymerzusammensetzung, umfassend 55 bis 95 Gew.-% eines Propylenpolymers und 5 bis 45 Gew.-% eines Ethylen-Propylen-Kautschuks, mit 0,01 bis 1 Gew.-% eines organischen Peroxids mit einer Halbwertszeit der Zersetzung von 6 Minuten bei einer Temperatur zwischen 80 und 109 °C und 0,001 bis 1,5 Gew.-% eines Co-Agens, wobei alle Gewichtsprozentsätze auf dem Gesamtgewicht der Polymerzusammensetzung basiert sind, wobei das Mischen bei einer Temperatur durchgeführt wird, die unterhalb der Temperatur ist, bei der das organische Peroxid eine Halbwertszeit der Zersetzung von 6 Minuten aufweist, um eine gemischte Polymerzusammensetzung zu gewinnen, und anschließend Schmelzemischen der gemischten Polymerzusammensetzung, um das heterophasige Propylencopolymer herzustellen.

2. Verfahren nach Anspruch 1, wobei das organische Peroxid eine Halbwertszeit der Zersetzung von 6 Minuten bei einer Temperatur zwischen 82 und 105 °C, bevorzugter zwischen 85 und 100 °C, aufweist.

3. Verfahren nach Anspruch 1, wobei das organische Peroxid aus der Gruppe, bestehend aus tert-Amylperoxyneodecanoat, tert-Butylperoxyneodecanoat, 1,1,3,3-Tetramethylbutyl-peroxypivalat, tert-Butylperoxyneoheptanoat, tert-Amylperoxypivalat, tert-Butylperoxypivalat, Di(3,5,5-trimethylhexanoyl)peroxid, Dilauroylperoxid, Didecanoylperoxid, 2,5-Dimethyl-2,5-di(2-ethylhexanoylperoxy)hexan, 1,1,3,3-Tetramethylbutylperoxy-2-ethylhexanoat und tert-Amylperoxy-2-ethylhexanoat, ausgewählt wird.

4. Verfahren nach einem der Ansprüche 1 bis 3, wobei das organische Peroxid eine Struktur gemäß Formel I aufweist
R1-(C=O)-O-O-(C=O)-R2 (I),
wobei R1 und R2 gleich oder verschieden sind und aus Alkyl-, Aryl- oder Aralkylgruppen ausgewählt werden, die zwischen 2 und 30 Kohlenstoffatome, bevorzugt zwischen 6 und 25 Kohlenstoffatome, bevorzugter zwischen 10 und 20 Kohlenstoffatome, aufweisen.

5. Verfahren nach einem der Ansprüche 1 bis 4, wobei das Peroxid aus der Gruppe, bestehend aus Di(3,5,5-trimethylhexanoyl)peroxid, Dilauroylperoxid und Didecanoylperoxid, ausgewählt wird, wobei das Peroxid bevorzugt Dilauroylperoxid ist.

6. Verfahren nach einem der Ansprüche 1 bis 5, wobei das Co-Agens aus der Gruppe, bestehend aus Divinylverbindungen, Allylverbindungen, Verbindungen mit zwei (Meth)acrylatgruppen, Dienen und Gemischen dieser ungesättigten Monomere, ausgewählt wird.

7. Verfahren nach einem der Ansprüche 1 bis 6, wobei das Co-Agens ortho- oder para-Divinylbenzol ist.

8. Verfahren nach einem der Ansprüche 1 bis 7, wobei das Verfahren in einem Extruder durchgeführt wird, der eine Mischzone mit einer Temperatur unterhalb der Temperatur, bei der das organische Peroxid eine Halbwertszeit der Zersetzung von 6 Minuten aufweist, zum Mischen des Propylenpolymers, des Ethylen-Propylen-Kautschuks, des organischen Peroxids und des Co-Agens und eine nachfolgende Reaktionszone mit einer Temperatur über der Schmelztemperatur des Propylenpolymers zum Schmelzemischen der gemischten Polymerzusammensetzung aufweist.

9. Verfahren nach einem der Ansprüche 1 bis 8, wobei die Temperatur in der Mischzone zwischen 20 und 104 °C beträgt.

10. Verfahren nach einem der Ansprüche 1 bis 9, wobei das Propylenpolymer aus einem Propylenhomopolymer und/oder einem Propylencopolymer, umfassend mindestens 90 Gew.-% Propylen und bis zu 10 Gew.-% Ethylen und/oder mindestens ein C₄- bis C₁₀-Alphaolefin, ausgewählt werden kann.

11. Verfahren nach einem der Ansprüche 1 bis 10, wobei das Propylenpolymer ein Propylenhomopolymer ist.

12. Benutzung des heterophasigen Propylencopolymers nach einem der Ansprüche 1 bis 11 in Gartenmöbeln, Haushaltsgegenständen, Batteriegehäusen, Kraftfahrzeugteilen, Behältern, Spielzeugen, Kisten und Schachteln.

13. Benutzung von Dilauroylperoxid mit einem Co-Agens aus der Gruppe, bestehend aus 1,3-Butadien, Isopren, 2,3-Dimethylbutadien und ortho- oder para-Divinylbenzol, zum Behandeln einer heterophasigen Propylenpolymerzusammensetzung, umfassend 55 bis 95 Gew.-% eines Propylenpolymers und 5 bis 45 Gew.-% eines Ethylen-Propylen-Kautschuks, durch zuerst Mischen der Komponenten bei einer Temperatur unterhalb der Temperatur, bei der das Dilauroylperoxid eine Halbwertszeit der Zersetzung von 6 Minuten aufweist, um eine gemischte Polymerzusammensetzung zu gewinnen, und anschließend Schmelzemischen der gemischten Polymerzusammensetzung.

## Revendications

1. Procédé de préparation d'un copolymère de propylène hétérophasique comprenant le mélange d'une composition de polymère comprenant 55 à 95 % en poids d'un polymère de propylène et 5 à 45 % en poids d'un caoutchouc d'éthylène-propylène avec 0,01 à 1 % en poids d'un peroxyde organique avec un temps de demi-vie de décomposition de 6 minutes à une température comprise entre 80 et 109 °C et 0,001 à 1,5 % en poids d'un co-agent, tous les pourcentages en poids étant basés sur le poids total de la composition de polymère, le mélange étant effectué à une température qui est au-dessous de la température où le peroxyde organique a un temps de demi-vie de décomposition de 6 minutes pour obtenir une composition de polymère mixte, et ensuite mélanger à chaud la composition de polymère mixte pour préparer le copolymère de propylène hétérophasique.

2. Procédé selon la revendication 1, dans lequel le peroxyde organique a un temps de demi-vie de décomposition de 6 minutes à une température comprise entre 82 et 105 °C, davantage de préférence comprise entre 85 et 100 °C.

3. Procédé selon la revendication 1, dans lequel le peroxyde organique est choisi dans le groupe constitué par le peroxynéodécanoate de tert-amyle, le peroxynéodécanoate de tert-butyle, le peroxypivalate de 1,1,3,3-tétraméthylbutyle, le peroxynéoheptanoate de tert-butyle, le peroxypivalate de tert-butyle, le peroxyde de di(3,5,5-triméthylhexanoyle), le peroxyde de dilauroyle, le peroxyde de didécanoyle, le 2,5-diméthyl-2,5-di(2-éthylhexanoylperoxy)hexane, le peroxy-2-éthylhexanoate de 1,1,3,3-tétraméthylbutyle et le peroxy-2-éthylhexanoate de tert-amyle.

4. Procédé selon l'une quelconque des revendications 1 à 3, dans lequel le peroxyde organique a une structure selon la formule I
R1-(C=O)-O-O-(C=O)-R2 (I),
dans laquelle R1 et R2 sont identiques ou différents et sont choisi parmi des groupes alkyle, aryle et aralkyle, ayant entre 2 et 30 atomes de carbone, de préférence entre 6 et 25 atomes de carbone, davantage de préférence entre 10 et 20 atomes de carbone.

5. Procédé selon l'une quelconque des revendications 1 à 4, dans lequel le peroxyde est choisi dans le groupe constitué par le peroxyde de di(3,5,5-triméthylhexanoyle), le peroxyde de dilauroyle et le peroxyde de didécanoyle, de préférence le peroxyde est le peroxyde de di-lauroyle.

6. Procédé selon l'une quelconque des revendications 1 à 5, dans lequel le coagent est choisi dans le groupe constitué par les composés divinyle, les composés allyle, les composés avec deux groupes (méth)acrylate, les diènes et les mélanges de ces monomères insaturés.

7. Procédé selon l'une quelconque des revendications 1 à 6, dans lequel le coagent est l'ortho- ou le para-divinylbenzène.

8. Procédé selon l'une quelconque des revendications 1 à 7, dans lequel le procédé est effectué dans un extrudeur comprenant une zone de mélange ayant une température au-dessous de la température où le peroxyde organique a un temps de demi-vie de décomposition de 6 minutes pour le mélange du polymère de propylène, du caoutchouc d'éthylène-propylène, du peroxyde organique et du co-agent, et une zone de réaction subséquente ayant une température au-dessus de la température de fusion du polymère de propylène pour mélanger à chaud la composition de polymère mixte.

9. Procédé selon l'une quelconque des revendications 1 à 8, dans lequel la température dans la zone de mélange est comprise entre 20 et 104 °C.

10. Procédé selon l'une quelconque des revendications 1 à 9, dans lequel le polymère de propylène peut être choisi parmi un homopolymère de propylène et/ou un copolymère de propylène comprenant au moins 90 % en poids de propylène et jusqu'à 10 % en poids d'éthylène et/ou au moins une alpha-oléfine en C₄ à C₁₀.

11. Procédé selon l'une quelconque des revendications 1 à 10, dans lequel le polymère de propylène est un homopolymère de propylène.

12. Utilisation du copolymère de propylène hétérophasique selon l'une quelconque des revendications 1 à 11 dans les fournitures de jardin, les articles de maison, les boîtiers de batterie, les parties d'automobile, les récipients, les jouets, les caisses et les boîtes.

13. Utilisation du peroxyde de dilauroyle avec un co-agent du groupe constitué par le 1,3-butadiène, l'isoprène, le 2,3-diméthylbutadiène et l'ortho- ou le paradivinylbenzène dans le traitement d'une composition de polymère de propylène hétérophasique comprenant 55 à 95 % en poids d'un polymère de propylène et 5 à 45 % en poids d'un caoutchouc d'éthylène-propylène, en mélangeant d'abord les composants à une température au-dessous de la température où le peroxyde de dilauroyle a un temps de demi-vie de décomposition de 6 minutes pour obtenir une composition de polymère mixte et le mélange à chaud subséquent de la composition de polymère mixte.
